# EUROPEAN PATENT SPECIFICATION

(11) **EP 1 276 408 B1**
(45) Date of publication and mention of the grant of the patent: **17.11.2004**
(21) Application number: 01923832.8
(22) Date of filing: 25.04.2001
(51) Int. Cl.: A47J 27/21

(54) **ELECTRICAL LIQUID HEATING VESSELS AND HEATERS THEREFOR**
ELEKTRISCHER WASSSERERHITZUNGSBEHÄLTER UND DAZUGEHÖRIGER WASSERERHITZER
RECIPIENTS CHAUFFANTS ELECTRIQUES POUR LIQUIDE ET GENERATEURS DE CHALEUR CORRESPONDANTS

(30) Priority: 25.04.2000 GB 0010089
(43) Date of publication of application: 22.01.2003
(73) Proprietor: STRIX LIMITED, Ronaldsway, Isle of Man IM9 2RG (GB)
(72) Inventor: CRITCHLEY, Martin Charles, Ballasalla, Isle of Man IM9 2EB (GB)
(74) Representative: Leckey, David Herbert
(86) International application number: PCT/GB2001/001849
(87) International publication number: WO 2001/082759

(56) References cited:
- EP-A- 0 285 839
- EP-A- 0 948 924
- WO-A-99/48331
- GB-A- 2 316 847
- GB-A- 2 318 452
- US-A- 5 914 063

## Description

The present invention relates to electrical liquid vessels and heaters therefor and in particular to planar electrical heaters which are mounted to close an opening in the base of a liquid heating vessel such as a kettle or hot water jug.

Over recent years there has been a move away from using traditional, fully immersed, sheathed heating elements, which project into the vessel through a side wall or base wall of the vessel, to using planar heaters which close an opening in the base of the vessel and which are provided with a sheathed heating element or thick film heating element on their dry underside. Planar heaters, which have been used in continental Europe for some time, are perceived as being more aesthetic and more easily cleanable than the traditional immersed elements.

A possible problem arises with such heaters, however, in that they may be susceptible to overheating in situations where the vessel boils dry when it is placed down at an angle to the horizontal. Whilst the heater will be provided with some form of overheat protector comprising, for example, a bimetallic actuator arranged in good thermal contact with a part of the heater, in an angled boil to dry situation, that part of the heater which is provided with the overheat protector may remain covered in water whilst another part is exposed. The covered part of the heater will remain cool due to the presence of water, so that the uncovered uncooled part overheats, leading to possible failure of the heater.

To overcome this problem, it has been proposed to mount the planar heater at an angle to the horizontal and position the overheat protector at a location which, when the vessel is horizontal, is in an upper position whereby as water evaporates from the vessel this part of the heater will be exposed first, will rise in temperature first and thus cause the overheat protector to operate, even when the vessel is arranged on a slope. Examples of such arrangements are disclosed in GB-A-2,290,945 and EP-A-948,924.

Whilst angling the heater plate may go some way to alleviate the problem of overheating in an angled boil until dry situation, the methods of mounting the planar heater are not ideal. In GB-A-2,290,945 the heater is mounted perpendicular to the vessel axis and the vessel itself is tipped at an angle to the vertical in order to achieve the desired inclination of the heater. In certain circumstances however, particularly with tall vessels, this may be unsatisfactory as it may render the vessel unstable.

In EP-A-948,924 the vessel is provided with a mounting flange which extends at an angle to the vessel axis, and against which the heater is sealed. This arrangement is, however, unsatisfactory in that it makes mounting of the heater more difficult.

EP-A-285 839 shows a heater having a a generally planar central portion and a peripheral mounting flange.

The present invention seeks to provide a simpler arrangement for mounting an angled planar heater in a liquid heating vessel, and from a first aspect provides an electric heater as claimed in claim 1.

In this way, the mounting flange may be mounted in the vessel generally perpendicularly to the axis of the heating vessel (i.e. generally horizontally in use) for ease of installation, and when it is so installed, the planar heating portion will be inclined at a desired angle to the flange, at an angle to the horizontal.

In this way a generally horizontally arranged support or mounting location can be provided on the heating vessel, which facilitates fixing of the heater, especially in existing vessels, where the same vessel body can be used for inclined and horizontally arranged heaters.

The generally planar heating portion may be provided with any suitable heating means. For example, a sheathed heating element may be provided on the underside of the heating portion. Preferably, however, the heating means comprises a thick film heating track provided on an electrically insulated part of the underside of the heating portion.

The degree of inclination of the heating portion of the heater to the mounting flange can be chosen to suit the particular application. Preferably, however, it is less than or equal to 5°, more preferably around 3°.

Preferably the extended plane of the heating portion lies below and does not intersect the flange. This is advantageous, particular in the context of thick film heaters, where it facilitates printing of the heater layers.

The mounting flange may extend to the free edge of the heater, but in certain embodiments, it may form the bottom of a mounting channel for the heater, as described in WO96/18331.

The mounting flange of the heater may be clamped in position relative to the support, for example by a clamping ring engaging under the mounting flange.

However, as mentioned above, in other embodiments where the mounting flange comprises part of a mounting channel, the channel may be crimped over a mounting lip provided on the vessel body, in the manner disclosed in WO96/18331.

It will be appreciated that from a further aspect the invention extends to an electric liquid heating vessel comprising a planar heater mounted to close an opening in the base of the vessel, wherein said vessel is provided with a support for the heater which is arranged generally perpendicularly to the axis of the vessel, and a heater in accordance with the invention located against the support.

The heater may directly contact the support or cooperate therewith through a seal.

A preferred embodiment of the invention will now be described by way of example only, with reference to the accompanying drawings in which:
Figure 1 shows, schematically a liquid heating vessel incorporating a heater embodying the invention;
Figure 2 shows a plan view sectional view of a heater embodying the invention;
Figure 3 shows a section along line 3-3 of the Figure 2;
Figure 4 is a side view of the heater of Figure 2 in the direction of arrow IV; and
Figure 5 shows a further embodiment of the invention.

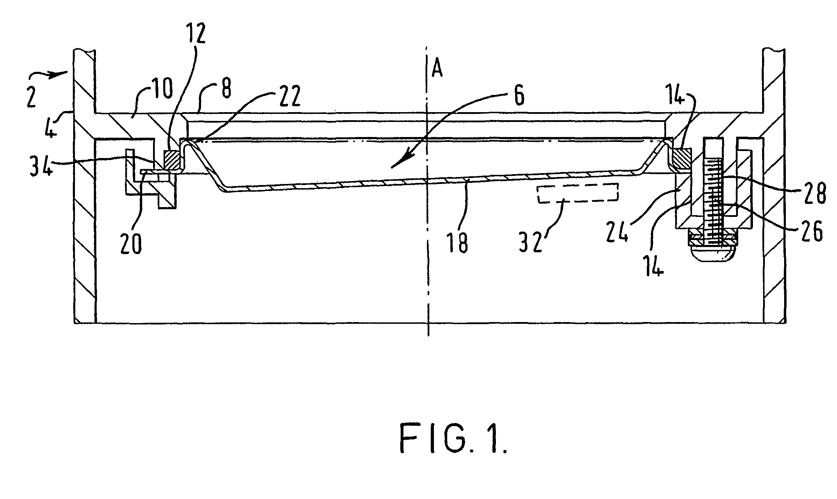

With reference to Figure 1, a kettle or hot water jug 2 comprises a moulded plastics body having a wall 4. A plate heater 6 is mounted to close an opening 8 defined by the inner periphery of a flange 10 which extends inwardly from the vessel wall 4. The flange 10 is formed with a seal seat 12 which received a silicone rubber or similar seal 14.

The plate heater 6 comprises a pressed metal, most preferably a stainless steel, plate 16 having a central, generally planar heating portion 18 and an annular, planar mounting flange 20 surrounding the heating portion 18. The mounting flange 20 is joined to the heating portion 18 by a strengthening rim 22. The central planar region 18 is provided on its underside with a layer of insulation on which is deposited, in a known manner, a thick film resistive heating track (not shown).

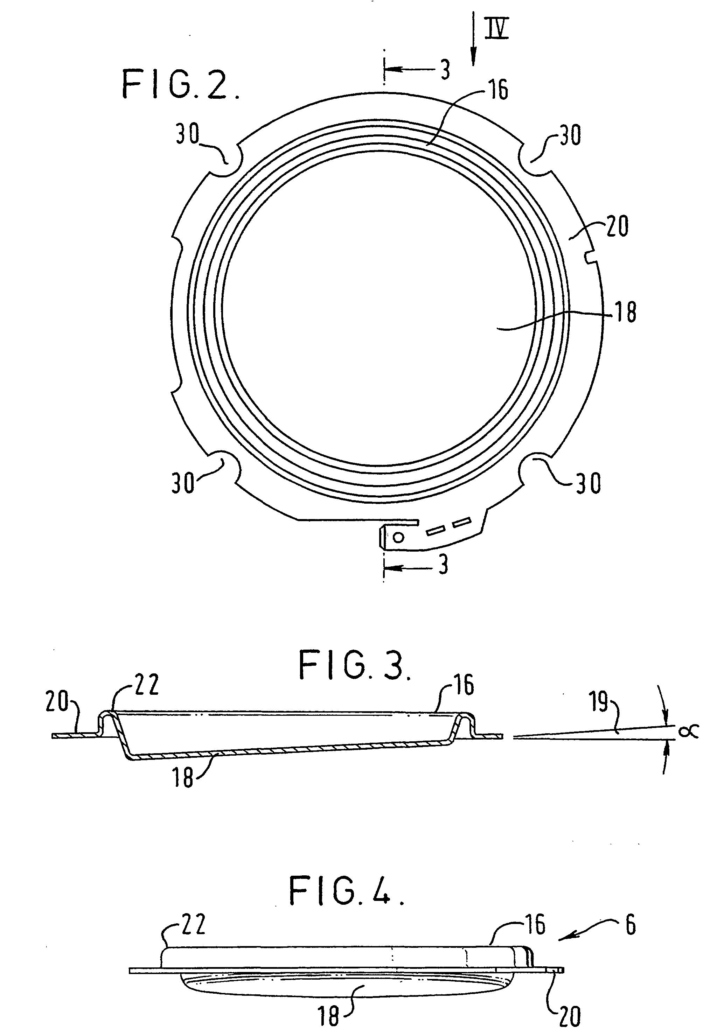

As can be seem from Figures 1 and 3, the central planar heating region 18 is arranged at an angle α to the plane of the mounting flange 20 which, when installed in the vessel base is generally horizontal. In this embodiment the angle α is about 3°, but this can be varied as necessary for any particular application.

The extended plane 19 of the heating region 18 lies below and does not intersect the mounting flange 20. This facilitates deposition of the various layers of the thick film heater using screen printing technology.

The heater 6 is mounted to the vessel body by a clamping ring 24 which abuts the underside of the flange 20 and which is mounted in position by four screws 26 which screw into bosses 28 moulded into the vessel flange 10. The heater flange 20 is provided with scallops 30 to engage over the bosses 28 and correctly align the heater 6 in the vessel base. The clamping ring 24 pushes the mounting flange 20 upwardly, compressing the seal 14 to make a watertight seal around the heater 6. When fully tightened, the mounting flange 20 comes into contact with the horizontal lower surface 34 of the vessel flange 10 which lies generally perpendicular to the axis A of the vessel.

As shown in Figure 1, in use a thermally sensitive control means 32 eg comprising a bimetallic actuator is arranged so as to lie under the raised end of the heater plate 6. In this embodiment, this is arranged to one side of the vessel centre-line, although it could be in other positions e.g. adjacent the handle of the vessel.

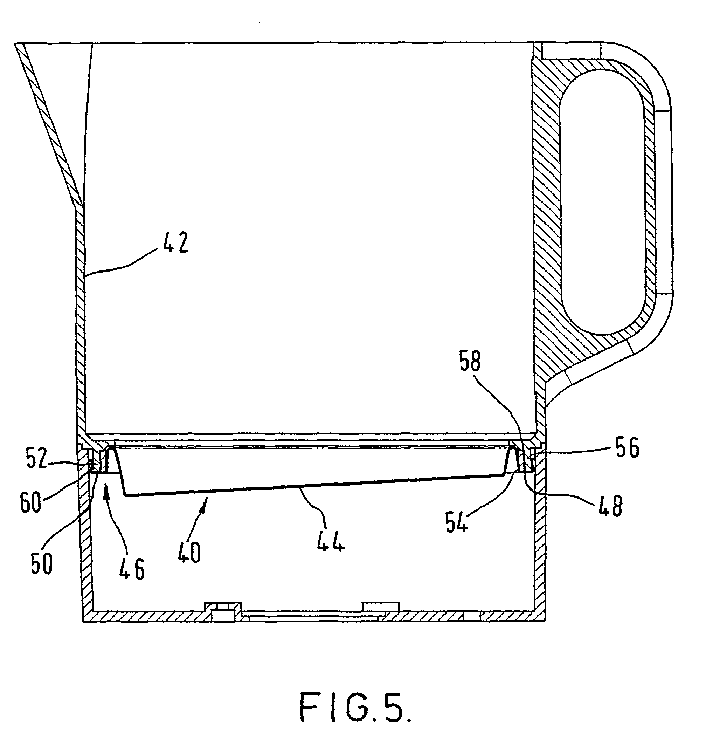

With reference to Figure 5, a second embodiment of the invention is disclosed. In this embodiment a plate heater 40 is mounted in the bottom of a plastics vessel body 42. As in the earlier embodiment, the heater comprises a central, planar, heating portion 44 provided with a thick film heater, and a peripheral mounting portion 46. In this embodiment, however, the mounting portion 46 is formed as a channel 48 in the manner described in WO96/18331.

The channel 48 comprises a base flange 50, an outer wall 52, and an inner wall 54. As shown the channel 48 engages over a beaded mounting lip 54 depending from the vessel body 42. A seal 58 is arranged between the inner wall 54 and the lip 56. The outer wall 52 is crimped over the beaded lip 56 to mount the heater in position, with base flange 50 located against the bottom end 60 of the lip 56.

As in the earlier embodiment the planar heating position 44 is angled at about 3° to the flange 50 and its extended plane does not intersect the flange 50.

It will be seen that the invention provides a simple method for mounting a plate heater in an angled manner in a liquid heating vessel which requires minimal if any adaptation of conventional mounting arrangements.

It will be appreciated that various modifications may be made to the arrangement of the preferred embodiments without departing from the scope of the invention. For example, while the heater has been described as having a thick film heating element, it could equally be provided with a sheathed heating element. The heater could also be a cast heater with an embedded element. Also, although the clamping ring has been shown as a discrete component, it could in fact be an integral part of a thermally sensitive control for the heater, for example a part of one of the Applicant's U30 series of controls. Also, whilst the mounting flange described has been shown as a continuous ring, it could be formed as a series of discrete location means.

Also, in the embodiment of Figure 5, the mounting channel need not be crimped over a lip, as shown, but could merely be clamped against it by suitable means.

## Claims

1. An electric heater (6;40) for a liquid heating vessel comprising a generally planar heating portion (18;44) lying in a first plane (19) and a mounting flange (20;50) arranged around the periphery of the planar heating portion (16;44) and lying in a second plane, **characterised in that**, the plane (19) of planar heating portion (16;44) is inclined at an angle (α) to that of the mounting flange (20;50).

2. A heater as claimed in claim 1 wherein the planar heating portion (18;44) is provided with a thick film heating track.

3. A heater as claimed in claim 1 or 2 wherein the angle (α) of inclination of the plane (19) of the heating portion (18;44) of the heater to that of the mounting flange (20;50) is less than or equal to 5°.

4. A heater as claimed in claim 3 wherein the angle (α) is about 3°.

5. A heater as claimed in any preceding claim wherein the plane (19) of the heating portion (18;44) lies below and does not intersect the mounting flange (20;50).

6. A heater as claimed in any preceding claim wherein said mounting flange (20) extends to the edge of the heater (6).

7. A heater as claimed in any of claims 1 to 5 wherein said mounting flange (50) forms a part of a mounting channel (48) for the heater (40).

8. An electric liquid heating vessel (2;42) comprising a planar heater (6;40) mounted to close an opening (8) in the base of the vessel, wherein said vessel is provided with a support (34;60) for the heater which is arranged generally perpendicularly to the axis of the vessel, and a heater (6;40) as claimed in any preceding claim located against said support (34;60).

9. An electric liquid heating vessel as claimed in claim 8 wherein the mounting flange (20) is clamped against the support (34) by a clamping ring (24) engaging under the flange (20).

10. An electric liquid heating vessel as claimed in claim 8 comprising a heater (40) as claimed in claim 7 wherein an outer wall (52) of the mounting channel (48) is clamped over a mounting lip (54).

## Patentansprüche

1. Elektrisches Heizgerät (6; 40) für einen Flüssigkeitserhitzungsbehälter, umfassend: einen im Allgemeinen ebenen Heizabschnitt (18; 44), welcher in einer ersten Ebene (19) liegt und einen Anbringungsflansch (20; 50), welcher um den Umfang des ebenen Heizabschnitts (16; 44) herum angeordnet ist und in einer zweiten Ebene liegt,
**dadurch gekennzeichnet, dass** die Ebene (19) des ebenen Heizabschnitts (16; 44) um einen Winkel (α) gegenüber der des Anbringungsflansches (20; 50) geneigt ist.

2. Heizgerät nach Anspruch 1, wobei der ebene Heizabschnitt (18; 44) mit einer Dickfilm-Heizspur versehen ist.

3. Heizgerät nach einem der Ansprüche 1 oder 2, wobei der Neigungswinkel (α) der Ebene (19) des Heizabschnitts (18; 44) des Heizgeräts gegenüber der des Anbringungsflansches (20; 50) kleiner oder gleich 5° ist.

4. Heizgerät nach Anspruch 3, wobei der Winkel (α) ungefähr 3° beträgt.

5. Heizgerät nach einem der vorhergehenden Ansprüche, wobei die Ebene (19) des Heizabschnitts (18; 44) unterhalb des Anbringungsflansches (20; 50) liegt und sich mit diesem nicht überschneidet.

6. Heizgerät nach einem der vorhergehenden Ansprüche, wobei sich der Anbringungsflansch (20) bis zum Rand des Heizgeräts (6) erstreckt.

7. Heizgerät nach einem der Ansprüche 1 bis 5, wobei der Anbringungsflansch (50) einen Teil eines Anbringungskanals (48) für das Heizgerät (40) bildet.

8. Elektrischer Flüssigkeitserhitzungsbehälter (2; 42), umfassend: ein ebenes Heizgerät (6; 40), welches so angebracht ist, dass es eine Öffnung (8) im Boden des Behälters verschließt, wobei der Behälter mit einer Halterung (34; 60) für das Heizgerät versehen ist, welche im Allgemeinen senkrecht zur Achse des Behälters angeordnet ist, und wobei ein Heizgerät (6; 40) nach einem der vorhergehenden Ansprüche an der Halterung (34; 60) angeordnet ist.

9. Elektrischer Flüssigkeitserhitzungsbehälter nach Anspruch 8, wobei der Anbringungsflansch (20) durch einen unter dem Flansch (20) eingreifenden Klemmring (24) an die Halterung (34) geklemmt ist.

10. Elektrischer Flüssigkeitserhitzungsbehälter nach Anspruch 8, umfassend ein Heizgerät (40) nach Anspruch 7, wobei eine äußere Wand (52) des Anbringungskanals (48) über eine Anbringungslippe (54) geklemmt ist.

## Revendications

1. Dispositif de chauffage électrique (6 ; 40) destiné à un récipient de chauffage de liquides comprenant une partie chauffante globalement plane (18 ; 44) située dans un premier plan (19) et une bride de montage (20 ; 50) disposée autour de la périphérie de la partie chauffante plane (16 ; 44) et située dans un deuxième plan, **caractérisé en ce que** le plan (19) de la partie chauffante plane (16 ; 44) est incliné d'un angle (α) par rapport à celui de la bride de montage (20 ; 50).

2. Dispositif de chauffage selon la revendication 1, dans lequel la partie chauffante plane (18 ; 44) est pourvue d'une bande de chauffage en film épais.

3. Dispositif de chauffage selon la revendication 1 ou 2, dans lequel l'angle (α) d'inclinaison du plan (19) de la partie chauffante (18 ; 44) du dispositif de chauffage par rapport à celui de la bride de montage (20 ; 50) est inférieur ou égal à 5°.

4. Dispositif de chauffage selon la revendication 3, dans lequel l'angle (α) vaut à peu près 3°.

5. Dispositif selon l'une quelconque des revendications précédentes, dans lequel le plan (19) de la partie chauffante plane (18 ; 44) est situé au-dessous de la bride de montage (20 ; 50) et ne la coupe pas.

6. Dispositif selon l'une quelconque des revendications précédentes, dans lequel ladite bride de montage (20) s'étend jusqu'au le bord du dispositif de chauffage (6).

7. Dispositif selon l'une quelconque des revendications 1 à 5, dans lequel ladite bride de montage (50) forme une partie de rainure de montage (48) destinée au dispositif de chauffage (40).

8. Récipient de chauffage électrique de liquides (2 ; 42) comprenant un dispositif plan de chauffage (6 ; 40) monté pour permettre la fermeture d'une ouverture (8) située dans la base du récipient, ledit récipient étant pourvu d'un support (34 ; 60) destiné au dispositif de chauffage, lequel est disposé globalement perpendiculairement à l'axe du récipient, et un dispositif de chauffage (6 ; 40) selon l'une quelconque des revendications précédentes, situé contre ledit support (34 ; 60).

9. Récipient de chauffage électrique de liquides selon la revendication 8, dans lequel la bride de montage (20) est serrée contre le support (34) à l'aide d'une bague de serrage (24) que l'on engage sous la bride (20).

10. Récipient de chauffage électrique de liquides selon la revendication 8, comprenant un dispositif de chauffage (40) selon la revendication 7, dans lequel une paroi externe (52) de la rainure de montage (48) enserre un lèvre de montage(54).
